# EUROPÄISCHE PATENTSCHRIFT

(11) **EP 3 695 963 B1**
(45) Veröffentlichungstag und Bekanntmachung des Hinweises auf die Patenterteilung: **09.08.2023**
(21) Anmeldenummer: 19212384.2
(22) Anmeldetag: 29.11.2019
(51) Int. Cl.: B32B 17/10, E04F 11/18

(54) **GLASVERBUNDEINHEIT UND VERWENDUNG EINER GLASVERBUNDEINHEIT ALS FUNKTIONELLES ELEMENT EINES GEBÄUDES**
GLASS COMPOSITE UNIT AND USE OF A GLASS COMPOSITE UNIT AS A FUNCTIONAL ELEMENT OF A BUILDING
UNITÉ DE VERRE COMPOSITE ET UTILISATION D'UNE UNITÉ DE VERRE COMPOSITE COMME ÉLÉMENT FONCTIONNEL D'UN BÂTIMENT

(30) Priorität: 12.02.2019 DE 102019103516
(43) Veröffentlichungstag der Anmeldung: 19.08.2020
(73) Patentinhaber: sedak GmbH & Co. KG, 86368 Gersthofen (DE)
(72) Erfinder: Fritz, Schlögl, 86391 Stadtbergen (DE)
(74) Vertreter: Charrier Rapp & Liebau

(56) Entgegenhaltungen:
- EP-A2- 1 010 963
- DE-C1- 19 958 372
- US-A1- 2014 079 474

## Beschreibung

Die Erfindung betrifft eine Glasverbundeinheit nach dem Oberbegriff des Anspruchs 1 sowie die Verwendung einer Glasverbundeinheit als funktionelles Element eines Gebäudes nach Anspruch 15.

Bei der Ausführung moderner Gebäude bzw. einzelnen Elementen von Gebäuden, beispielsweise bei Fassadenelementen oder Treppen, werden zunehmend Glasverbundeinheiten als Konstruktionselemente eingesetzt. Eine Glasverbundeinheit besteht dabei aus mehreren Glasscheiben die über Verbindungsschichten lasttragend miteinander verbunden sind. Die Fertigung der Glasverbundeinheit erfolgt dabei in der Regel durch Erwärmen der Anordnung aus Glasscheiben und den dazwischen angeordneten Verbindungsschichten unter Druck auf Temperaturen oberhalb der Verarbeitungstemperatur der Verbindungsschichten und das anschließende Abkühlen der Glasverbundeinheit. Die Befestigung der Glasverbundeinheit an Stützkonstruktionen oder die Verbindung mehrerer Glasverbundeinheiten erfolgt über Befestigungselemente, die bevorzugt in die Glasverbundeinheit eingebunden sind. Bei Glasverbundeinheiten mit zumindest drei Glasscheiben können die Befestigungselemente dabei insbesondere in einer Ausnehmung einer zwischen zwei Glasscheiben angeordneten mittleren Glasscheibe angeordnet sein. Eine derartige Glasverbundeinheit geht beispielsweise aus der US 7 165 362 B2 hervor. An den in Richtung der Glasverbundeinheit bzw. in Richtung der einzelnen Glasscheiben der Glasverbundeinheit weisenden Flächen ist das Befestigungselement hierbei über eine Verbindungsschicht mit den Glasscheiben verklebt.

In der modernen Architektur finden die beschriebenen Glasverbundeinheiten mit integriertem Befestigungselement insbesondere aufgrund Ihrer vielfältigen Einsatzmöglichkeiten sowie der optisch ansprechenden Erscheinungsform Anwendung. Allerdings weisen die Glasverbundeinheiten oftmals Mängel im Bereich der Befestigungselemente auf, insbesondere in Form von Delaminationen, d.h. einem Ablösen miteinander verbundener Glasscheiben oder einem Ablösen des mit einer Glasscheibe verbundenen Befestigungselements, sowie in Form von Brüchen einzelner Glasscheiben. Derartige Beeinträchtigungen treten insbesondere bei der Fertigung der Glasverbundeinheiten auf. Allerdings kann auch beim Einbau der Glasverbundeinheiten oder bei bereits eingebauten Glasverbundeinheiten das Auftreten derartiger Schäden beobachtet werden. Das optische Erscheinungsbild der Glasverbundeinheit wird durch die beschriebenen Mängel stark beeinträchtigt.

DE19958372C1 offenbart eine Glasverbundeinheit nach dem Oberbegriff des Anspruchs 1. US2014/079474A1 und EP1010963A2 offenbaren auch eine Glasverbundeinheit.

Aufgabe der Erfindung ist daher, eine Glasverbundeinheit bestehend aus zumindest drei über Verbindungsschichten verbundenen Glasscheiben und einem in die Glasverbundeinheit eingebundenen Befestigungselement bereitzustellen, bei dem keine Beeinträchtigung im Bereich des Befestigungselements, insbesondere keine Delaminationen oder Brüche einzelner Glasscheiben der Glasverbundeinheit, auftreten sowie die Verwendung einer derartigen Glasverbundeinheit als funktionelles Element eines Gebäudes.

Die Erfindung löst die Aufgabe durch eine Glasverbundeinheit mit den Merkmalen des Anspruchs 1 sowie die Verwendung einer derartigen Glasverbundeinheit als funktionelles Element eines Gebäudes nach Anspruch 15. Zweckmäßige Ausgestaltungen und vorteilhafte Weiterbildungen der Erfindung sind in den Unteransprüchen angegeben.

Die eingangs genannte Glasverbundeinheit umfasst mindestens eine erste Glasscheibe und eine zweite Glasscheibe sowie eine zwischen der ersten und der zweiten Glasscheibe angeordnete dritte Glasscheibe, wobei die dritte Glasscheibe mindestens eine Ausnehmung zur Aufnahme eines Befestigungselements aufweist. Die Ausnehmung kann dabei randseitig oder vollständig in der dritten Glasscheibe liegend angeordnet sein. Zwischen der ersten Glasscheibe und der dritten Glasscheibe ist dabei eine erste Verbindungsschicht zur Verbindung der ersten Glasscheibe mit der dritten Glasscheibe und zwischen der zweiten Glasscheibe und der dritten Glasscheibe eine zweite Verbindungsschicht zur Verbindung der zweiten Glasscheibe mit der dritten Glasscheibe angeordnet. Über die erste Verbindungsschicht und die zweite Verbindungsschicht sind die einzelnen Glasscheiben dabei lasttragend miteinander verbunden bzw. miteinander verklebt. Die erste Verbindungsschicht und die zweite Verbindungsschicht können dabei aus dem gleichen Material bestehen, beispielsweise aus einem steifen bzw. hochfesten Polyvinylbutyral, einem Ethylenvinylacetat oder einem Ionoplast Polymer. Insbesondere sind die erste und die zweite Verbindungsschicht dabei transparent. In die mindestens eine Ausnehmung der dritten Glasscheibe ist ein Befestigungselement eingebracht. Bevorzugt entspricht die Form der Ausnehmung dabei im Wesentlichen der Form des Befestigungselements, jedoch ist die Ausnehmung dabei etwas größer ausgestaltet als das Befestigungselement, so dass das Befestigungselement darin eingebracht werden kann. Das Befestigungselement dient dabei zur Befestigung der Glasverbundeinheit an einer Stützkonstruktion oder zur Verbindung mehrerer derartiger Glasverbundeinheiten. Das Befestigungselement ist hierfür über eine der ersten Glasscheibe zugewandte erste Fläche durch die erste Verbindungsschicht mit der ersten Glasscheibe und/oder über eine der zweiten Glasscheibe zugewandte zweite Fläche durch die zweite Verbindungsschicht mit der zweiten Glasscheibe verbunden bzw. verklebt. Das Befestigungselement ist durch die beschriebene Ausgestaltung lasttragend mit der ersten Glasscheibe und/oder der zweiten Glasscheibe verbunden. Aus fertigungstechnischen Gründen sowie aus Gründen der Stabilität entspricht die Dicke des Befestigungselements bevorzugt der Dicke der dritten Glasscheibe.

Die Glasverbundeinheit kann neben der ersten, der zweiten und der dritten Glasscheibe auch noch weitere Glasscheiben umfassen, insbesondere kann die dritte Glasscheibe auch aus mehreren miteinander verbundenen Glasscheiben bestehen. Als Glasscheiben können im Floatglasverfahren hergestellte Glasscheiben aber auch sonstige Glasscheiben eingesetzt werden.

Die anfangs beschriebenen Beeinträchtigungen im Bereich des Befestigungselements bekannter Glasverbundeinheiten, speziell die Delaminationen oder Brüche einzelner Glasscheiben, resultieren aus Spannungen die zwischen den Glasscheiben und dem Befestigungselement, sowie Spannungen die zwischen den einzelnen Glasscheiben bestehen. Speziell in Folge des Fertigungsprozesses, wobei die Anordnung aus Glasscheiben, Verbindungsschichten und Befestigungselement auf Temperaturen oberhalb der Verarbeitungstemperatur der ersten und/oder der zweiten Verbindungsschicht erhitzt und anschließend abgekühlt wird (insbesondere auf Temperaturen unterhalb des Glasübergangspunktes der Verbindungsschichten), können bei den aus dem Stand der Technik bekannten Glasverbundeinheiten derartige Spannungen entstehen. Ursächlich für die Spannungen bei den aus dem Stand der Technik bekannten Glasverbundeinheiten ist eine zwischen einer oder jeder in Richtung der dritten Glasscheibe weisenden Stirnfläche des Befestigungselements und der dritten Glasscheibe angeordnete Verbindungsschicht. Insbesondere ist bei den aus dem Stand der Technik bekannten Glasverbundeinheiten die zwischen den einzelnen Glasscheiben angeordnete erste bzw. zweite Verbindungsschicht auch zwischen den in Richtung der dritten Glasscheibe weisenden Stirnflächen des Befestigungselements und der dritten Glasscheibe angeordnet. Das Befestigungselement wird dadurch über die in Richtung der dritten Glasscheibe weisenden Stirnflächen mit der dritten Glasscheibe verbunden. In Folge der Fertigung der Glasverbundeinheit, insbesondere in Folge der Abkühlung, können dadurch Spannungen zwischen den einzelnen Elementen der Glasverbundeinheit in diesem Bereich auftreten. Die auftretenden Spannungen resultieren aus den unterschiedlichen Längenausdehnungskoeffizienten der verwendeten Materialien. Die Längenausdehnungskoeffizienten typischerweise verwendeter Verbindungsschichten liegen im Bereich von ca. 100 - 150 · 10⁻⁶ [1/K] (Werte bei T = 20°C), wohingegen die Längenausdehnungskoeffizienten von Glas und den üblicherweise eingesetzten Befestigungselementen, beispielsweise Titan, in etwa bei 8,5 - 9 · 10⁻⁶ [1/K] liegen. Bei der Fertigung der Glasverbundeinheit können sich dadurch Spannungen im Bereich des Befestigungselements, insbesondere im Bereich der Stirnflächen des Befestigungselements, ergeben. Speziell können hierbei im Bereich einer Stirnfläche des Befestigungselements Spannungen senkrecht zur Ebene der Glasscheiben auftreten. Bestehende Spannungen können, aufgrund der haftenden Wirkung sowie der typischerweise geringen Elastizität der zwischen dem Befestigungselement und der dritten Glasscheibe angeordneten Verbindungsschicht oftmals nicht ausgeglichen werden und führen schließlich zu den oben beschriebenen Beeinträchtigungen der Glasverbundeinheit.

Bei der erfindungsgemäßen Glasverbundeinheit ist zwischen der oder jeder in Richtung der dritten Glasscheibe weisenden Stirnfläche des Befestigungselements und der dritten Glasscheibe eine sich von der ersten Verbindungsschicht und der zweiten Verbindungsschicht unterscheidende, das Befestigungselement und die dritte Glasscheibe nicht rigide verbindende Trennschicht eingebracht. Die Trennschicht ist dabei bevorzugt bereits vor der unter erhöhter Temperatur und Druck erfolgenden Fertigung der Glasverbundeinheiten in den Zwischenraum zwischen der bzw. den Stirnflächen des Befestigungselements und der dritten Glasscheibe eingebracht. In Abhängigkeit der Zusammensetzung bzw. der Eigenschaften der Trennschicht, insbesondere deren Viskosität bzw. das Vorliegen als Feststoff, wird die Trennschicht in den genannten Zwischenraum zwischen der dritten Glasscheibe und dem Befestigungselement eingelegt oder eingegossen. Durch die Anordnung der Trennschicht zwischen den Stirnflächen des Befestigungselements und der dritten Glasscheibe wird insbesondere auch ein Fließen der ersten oder zweiten Verbindungsschicht während des Fertigungsprozesses der Glasverbundeinheit in diesen Zwischenraum verhindert. Insbesondere das aus dem Stand der Technik bekannte Verkleben der oder jeder Stirnfläche des Befestigungselements mit der dritten Glasscheibe aufgrund einer in diesem Bereich angeordneten Verbindungsschicht und die daraus resultierenden Spannungen werden dadurch verhindert. Durch die Trennschicht werden Spannungen im Bereich des Befestigungselements, die insbesondere in Folge des Fertigungsprozesses der Glasverbundeinheit oder in Folge weiterer Temperaturbehandlungen, wie auch aufgrund natürlicher jahres- und tageszeitbedingter Temperaturschwankungen entstehen können, verringert bzw. verhindert. Die Trennschicht kann dabei insbesondere aus fertigungstechnischen sowie optischen Gründen eine Dicke im Bereich von 1 bis 5 mm, speziell im Bereich von 2 bis 3 mm, aufweisen. Bevorzugt bedeckt die Trennschicht dabei den gesamten Bereich der oder jeder in Richtung der dritten Glasscheibe weisenden Stirnfläche des Befestigungselements. Durch die Trennschicht wird zudem eine Verschmutzung des Zwischenraums zwischen der dritten Glasscheibe und dem Befestigungselement, beispielsweise bei einem randseitig angeordneten Befestigungselement, bei dem ansonsten Schmutz von außen in einen freien Zwischenraum eindringen könnte, verhindert. Außerdem ist durch die Trennschicht gewährleistet, dass das Befestigungselement, insbesondere ein metallisches Befestigungselement, nicht unmittelbar mit der dritten Glasscheibe in Berührung kommt. Hierdurch könnten ansonsten Schäden an der dritten Glasscheibe, beispielsweise Brüche aufgrund minimaler Bewegungen eines an der dritten Glasscheibe anliegenden Befestigungselements relativ zu der dritten Glasscheibe, entstehen. Durch die Trennschicht werden zudem bestehende Fertigungstoleranzen oder Unebenheiten der Ausnehmung oder des Befestigungselements ausgeglichen.

Wie bereits beschrieben, ist die Trennschicht bevorzugt vor der unter erhöhter Temperatur und Druck erfolgenden Fertigung der Glasverbundeinheiten in den Zwischenraum zwischen der bzw. den Stirnflächen des Befestigungselements und der dritten Glasscheibe eingebracht. Allerdings ist es auch denkbar, zunächst einen entsprechend ausgestalteten Platzhalter in den Zwischenraum zwischen der bzw. den Stirnflächen des Befestigungselements und der dritten Glasscheibe einzubringen, der nach der Fertigung der Glasverbundeinheit entfernt werden kann, wobei der Zwischenraum anschließend mit der Trennschicht gefüllt wird.

In einer bevorzugten Ausführungsform weist die Trennschicht eine Shore-A-Härte von unter 90 gemäß DIN ISO 7619-1:2012-02, insbesondere von unter 60, auf. Besonders bevorzugt weist die Trennschicht eine Shore-A-Härte von unter 40, insbesondere von unter 10 auf.

Gemäß einer Variante der Erfindung liegt die Shore-A-Härte der Trennscht dabei deutlich unter der Shore-A-Härte (bzw. einer dazu vergleichbaren Messgröße wie dem Druck-Elastizitätsmodul) der typischerweise verwendeten Verbindungsschichten der Glasverbundeinheiten. Durch eine Trennschicht mit der angegebenen Shore-A-Härte können die ansonsten auftretende Spannungen im Bereich des Befestigungselements unterbunden bzw. von dieser aufgenommen und somit mögliche Schäden der Glasverbundeinheit verhindert werden. Insbesondere für Trennschichten mit der oben beschriebenen Dicke im Bereich von 1 bis 5 mm, speziell im Bereich von 2 bis 3 mm, ist die angegebene Shore-A-Härte vorteilhaft, um Schäden der Glasverbundeinheit im Bereich des Befestigungselements zu verhindern.

In einer vorteilhaften Ausgestaltung der Glasverbundeinheit ist die Adhäsion zwischen der Trennschicht und dem Befestigungselement und/oder die Adhäsion zwischen der Trennschicht und den Glasscheiben und/oder die Adhäsion zwischen der Trennschicht und den Verbindungsschichten geringer als 1 N/mm². Zwischen den angegebenen Elementen der Glasverbundeinheit besteht folglich nahezu keine Verklebung bzw. Anhaftung. Gemäß einer weiteren Variante der Erfindung ist die Adhäsion zwischen der Trennschicht und den Glasscheiben bzw. dem Befestigungselement deutlich geringer als die Adhäsion typischerweise verwendeter Verbindungsschichten und den Glasscheiben bzw. dem Befestigungselement, die in der Regel bei deutlich über 20 N/mm² liegt. Der angegebene maximale Wert der Adhäsion der Trennschicht zu den angegebenen Elementen der Glasverbundeinheit von 1 N/mm² wird insbesondere auch nach dem Fertigungsprozess der Glasverbundeinheit nicht überschritten und liegt somit dauerhaft vor. Dadurch können die ansonsten auftretenden Spannungen im Bereich des Befestigungselements unterbunden und Schäden der Glasverbundeinheit verhindert werden.

In einer besonders bevorzugten Ausführungsform ist die Trennschicht transparent, insbesondere glasklar. Dadurch ist eine optisch ansprechende Ausgestaltung der Glasverbundeinheit, speziell auch im Bereich des Befestigungselements gegeben.

In einer vorteilhaften Ausgestaltung der Glasverbundeinheit besteht die Trennschicht aus einem Elastomer. Dadurch kann eine formfeste aber elastische Trennschicht bereitgestellt werden, die zur Verhinderung bzw. zur Aufnahme der oben beschriebenen Spannungen geeignet ist. Bei geeigneter Auswahl des Elastomers erfolgt durch den Fertigungsprozess ein lückenloses, insbesondere blasenfreies Anlegen des Elastomers in den Zwischenraum zwischen den Stirnflächen des Befestigungselements und der dritten Glasscheibe, ohne nennenswerte Anhaftung des Elastomers an den Verbindungsschichten, dem Befestigungselement oder den Glasscheiben. Insbesondere ist dadurch auch die Ausgestaltung der Trennschicht als eine dauerhaft beständige, speziell auch wasserabweisende und temperaturunempfindliche, Trennschicht möglich. Besonders bevorzugt besteht die Trennschicht aus einem weichen Polyvinylbutyral oder einem Silikon, insbesondere aus einem getemperten Silikon, insbesondere einem mehrfach getemperten Silikon. Das getemperte Silikon, speziell das mehrfach getemperte Silikon ist dabei, zumindest unter den gewöhnlichen Fertigungs- und Einsatzbedingungen der Glasverbundeinheit, vollständig ausreagiert. Es erfolgt somit keine Reaktion mit den weiteren Elementen der Glasverbundeinheit, insbesondere nicht mit der ersten oder der zweiten Verbindungsschicht. Aus dem getemperten Silikon treten unter den gewöhnlichen Fertigungs- und Einsatzbedingungen der Glasverbundeinheit auch keine Komponenten, wie beispielsweise Weichmacher oder sonstige Stoffe aus, insbesondere keine Stoffe, die die Haftungswirkung der Verbindungsschicht beeinträchtigen. Speziell durch Verwendung von Silikon oder einem weichen Polyvinylbutyral als Trennschicht ist ein lückenloses, insbesondere blasenfreies Anlegen der Trennschicht in den Zwischenraum zwischen den Stirnflächen des Befestigungselements und der dritten Glasscheibe möglich. Spannungen im Bereich des Befestigungselements, die zu den oben genannten Schäden der Glasverbundeinheit führen können, werden durch die Verwendung von Silikon oder einem weichen Polyvinylbutyral als Trennschicht verhindert. Insbesondere ermöglicht Silikon oder ein weiches Polyvinylbutyral die Ausgestaltung einer transparenten, glasklaren Trennschicht. In einer besonders bevorzugten Ausgestaltung besteht die Trennschicht aus einem kondensationsvernetzten oder platinvernetzten Silikon. Speziell diese aus der Medizintechnik bekannten Silikone erfüllen dabei die oben genannten Anforderungen bzw. Eigenschaften der Trennschicht. Insbesondere kann eine Trennschicht aus einem kondensationsvernetzten oder platinvernetzten Silikon als transparente, dauerhaft beständige, elastische Trennschicht mit der oben angegebenen Shore-A-Härte sowie den beschriebenen Adhäsionseigenschaften ausgestaltet werden.

In einer vorteilhaften Ausgestaltung der Glasverbundeinheit ist die erste Glasscheibe über die erste Verbindungsschicht vollflächig mit der dritten Glasscheibe und/oder die zweite Glasscheibe über die zweite Verbindungsschicht vollflächig mit der dritten Glasscheibe verbunden. Neben fertigungstechnischen Vorteilen ist dadurch insbesondere eine hoch belastbare Verbindung der einzelnen Glasscheiben gewährleistet.

Durch die oben beschriebene Verbindung der der ersten Glasscheibe zugewandten ersten Fläche des Befestigungselements über die erste Verbindungsschicht mit der ersten Glasscheibe und/oder die Verbindung der der zweiten Glasscheibe zugewandten zweiten Fläche des Befestigungselements über die zweite Verbindungsschicht mit der zweiten Glasscheibe ist eine lasttragende Verbindung des Befestigungselements mit der ersten Glasscheibe und/oder der zweiten Glasscheibe gegeben. Die beschriebene Einbindung des Befestigungselements in die Glasverbundeinheit ermöglicht somit eine lasttragende Befestigung der Glasverbundeinheit an einer Stützkonstruktion oder die Verbindung mehrerer Glasverbundeinheiten über das Befestigungselement. Insbesondere ist bei der beschriebenen Ausgestaltung eine lasttragende Verbindung der Stirnflächen des Befestigungselements mit der dritten Glasscheibe, die durch die erfindungsgemäße Trennschicht gerade verhindert wird, nicht erforderlich. Weiter ist die beschriebene Ausgestaltung auch bei der Fertigung der Glasverbundeinheit vorteilhaft. Hierbei kann beispielsweise die erste Glasscheibe vollflächig mit der ersten Verbindungsschicht versehen und anschließend die dritte Glasscheibe sowie das in die Ausnehmung eingebrachte Befestigungselement auf der ersten Verbindungsschicht platziert werden. Für die Fixierung des Befestigungselements an der Glasverbundeinheit ist dabei keine separate Verbindungsschicht erforderlich. In Abhängigkeit der Eigenschaften der Trennschicht kann diese vor oder nach dem Anbringen der zweiten Verbindungsschicht und der zweiten Glasscheibe in den Zwischenraum zwischen dem Befestigungselement und der dritten Glasscheibe eingebracht werden.

In einer bevorzugten Ausführungsform besteht das Befestigungselement aus einem Metall, insbesondere aus Titan, oder aus einer Metalllegierung. Dadurch ist ein belastbares Befestigungselement gegeben, dass eine Befestigung der Glasverbundeinheit an einer Stützkonstruktion oder die Verbindung mehrerer Glasverbundeinheiten ermöglicht. Besonders bevorzugt besteht das Befestigungselement dabei aus Titan, da die thermischen Eigenschaften von Titan, insbesondere der Längenausdehnungskoeffizient, in etwa den thermischen Eigenschaften der verwendeten Glasscheiben im Bereich der Fertigungstemperaturen bzw. der üblichen Einsatztemperaturen der Glasverbundeinheit entspricht. Dadurch können unnötige Spannungen in der Glasverbundeinheit reduziert bzw. vermieden werden.

Bevorzugt ist das in die Ausnehmung eingebrachte Befestigungselement zumindest teilweise von außen, d.h. von außerhalb der Glasverbundeinheit, zugänglich. Eine derartige Ausgestaltung ist insbesondere für die Befestigung der Glasverbundeinheit an einer Stützkonstruktion, beispielsweise einer Verschraubung mit dieser, erforderlich. Bei einer randseitig angeordneten Ausnehmung liegt ohnehin eine Öffnung nach außen vor. Bei einer innenliegend in der dritten Glasscheibe angeordneten Ausnehmung kann hierfür eine Öffnung in die erste Glasscheibe und/oder die zweite Glasscheibe eingebracht sein. Insbesondere kann das Befestigungselement hierbei einen in die Öffnung der ersten und/oder der zweiten Glasscheibe ragenden Steg aufweisen. In dem Zwischenraum des durch die Öffnung der ersten und/oder der zweiten Glasscheibe ragenden Stegs und der die Öffnung aufweisenden Glasscheibe kann eine Verbindungsschicht oder auch die oben beschriebene Trennschicht eingebracht sein. Die Öffnung kann dabei insbesondere auch kleiner als das Befestigungselement ausgestaltet sein, um ein Ausbringen des Befestigungselements durch die Öffnung zu verhindern. Außerdem ist dadurch zumindest teilweise eine Verbindung des Befestigungselements mit der die Öffnung aufweisenden Glasscheibe über die zwischen dieser Glasscheibe und der dritten Glasscheibe angeordneten Verbindungsschicht möglich. Besonders bevorzugt ist das Befestigungselement und/oder die Trennschicht vollständig innerhalb der Ausnehmung angeordnet. Falls das Befestigungselement einen durch eine Öffnung der ersten oder zweiten Glasscheibe ragenden Steg aufweist, ist dieser ebenfalls bevorzugt vollständig in der Öffnung angeordnet. Für ein Nachbearbeiten der Glasverbundeinheit, beispielsweise eine nachträgliche Kanten- bzw. Oberflächenbearbeitung durch Schleifen oder Polieren, ist es vorteilhaft, wenn das Befestigungselement bzw. ein Steg des Befestigungselements und/oder die Trennschicht nicht mit der Außenkante bzw. Außenfläche der Glasverbundeinheit abschließt, sondern etwas nach innen versetzt angeordnet ist. Beeinträchtigungen der Glasverbundeinheit aufgrund eines Nachbearbeitungsprozesses bzw. eine Beeinträchtigung des dafür eingesetzten Werkzeugs durch das Befestigungselement oder die Trennschicht, beispielsweise durch ein Verschmieren der weichen Trennschicht auf der Oberfläche der Glasverbundeinheit, werden dadurch vermieden. Bei einer randseitigen Ausnehmung kann das Befestigungselement und/oder die Trennschicht beispielsweise um einen gewissen Abstand in Richtung des Inneren der Glasverbundeinheit versetzt angeordnet sein. In den dadurch entstehenden Versatz an der Außenkante der Glasverbundeinheit kann nachträglich beispielsweise ein Adapter zur Befestigung an einer Stützkonstruktion, ein Distanzstück oder ein Füllmaterial eingebracht werden.

In einer vorteilhaften Ausgestaltung ist das Befestigungselement von außerhalb der Glasverbundeinheit zugänglich oder weist nach außen weisende Mittel zum Befestigen der Glasverbundeinheit an einer Stützkonstruktion auf. Beispielsweise kann die Befestigungseinheit eine mit einem Gewinde versehene Bohrung oder einen nach außen geführten Bolzen aufweisen über die bzw. über den eine Befestigung der Glasverbundeinheit an einer Stützkonstruktion oder eine Verbindung mit weiteren Glasverbundeinheiten erfolgen kann.

In einer besonders vorteilhaften Ausgestaltung der Glasverbundeinheit ist die Ausnehmung randseitig an der dritten Glasscheibe angeordnet. Dies ermöglicht eine fertigungstechnisch vorteilhafte Herstellung einer hochbelastbaren Glasverbundeinheit, insbesondere ohne zusätzliche Öffnungen, die zur Befestigung der Glasverbundeinheit über das in die Ausnehmung eingebrachte Befestigungselement in die erste Glasscheibe und/oder die zweite Glasscheibe eingebracht werden müssen.

In einer weiteren Ausgestaltung ist die Ausnehmung innenliegend in der dritten Glasscheibe angeordnet, wobei die erste Glasscheibe und/oder die zweite Glasscheibe eine Öffnung im Bereich der Ausnehmung aufweist. Durch die Öffnung ist das in die Ausnehmung eingebrachte Befestigungselement zugänglich, wodurch eine Befestigung der Glasverbundeinheit über das Befestigungselement möglich ist. Das Befestigungselement kann dabei speziell auch aus einem Befestigungselement bzw. einer aus zwei Befestigungselementen zusammengesetzten Befestigungseinheit bestehen, das sowohl von einer Öffnung der ersten Glasscheibe als auch von einer Öffnung der zweiten Glasscheibe zugänglich ist. Die dritte Glasscheibe weist dabei eine entsprechende Dicke zur Aufnahme des Befestigungselements bzw. der Befestigungseinheit auf. Die dritte Glasscheibe kann dabei auch, wie oben bereits beschrieben, aus mehreren miteinander verbundenen Glasscheiben bestehen. Besonders bevorzugt umfasst das Befestigungselement dabei zumindest einen Steg, der durch die zumindest eine Öffnung der ersten Glasscheibe und/oder der zweiten Glasscheibe geführt ist. Dadurch ist eine besonders vorteilhafte Ausgestaltung sowie Einbindung des Befestigungselements in die Glasverbundeinheit gegeben, die eine lasttragende und stabile Befestigung der Glasverbundeinheit an einer Stützkonstruktion oder eine Verbindung mit weiteren Glasverbundeinheiten ermöglicht. In einer besonders vorteilhaften Ausgestaltung der Glasverbundeinheit ist zwischen dem zumindest einen Steg und der zumindest einen Öffnung der ersten Glasscheibe und/oder der zweiten Glasscheibe die Trennschicht angeordnet. Durch die eingefügte Trennschicht bzw. die eingefügten Trennschichten werden Spannungen der Glasverbundeinheit im Bereich des Befestigungselements verhindert.

Bevorzugt erfolgt die Verwendung der erfindungsgemäß gebildeten Glasverbundeinheit als funktionelles Element eines Gebäudes, insbesondere als Fassadenelement, oder als funktionelles Element einer Gebäudeeinrichtung, insbesondere einer Treppe. Die erfindungsgemäßen Glasverbundeinheiten können dabei als lasttragendes und optisch ansprechendes Konstruktionselement eingesetzt werden. Beispielsweise ist es dabei auch möglich, eine aus den erfindungsgemäßen Glasverbundeinheiten bestehende Gebäudefassade oder ein aus den erfindungsgemäßen Glasverbundeinheiten bestehendes Gebäudeelement, z.B. eine Treppe, herzustellen.

Die Erfindung wird nachfolgend anhand von Ausführungsbeispielen mit Bezug auf die begleitenden Zeichnungen beschrieben. Diese zeigen:
- **Fig. 1**: einen seitlichen Schnitt einer ersten Glasverbundeinheit im Bereich eines randseitig angeordneten Befestigungselements;
- **Fig. 2**: einen Ausschnitt eines horizontalen Schnitts durch die mittlere Glasplatte der Glasverbundeinheit aus Fig. 1;
- **Fig. 3**: einen Schnitt durch eine zweite Glasverbundeinheit im Bereich eines innenliegend angeordneten Befestigungselements;
- **Fig. 4**: einen Schnitt durch eine dritte Glasverbundeinheit im Bereich einer aus zwei Befestigungselementen bestehenden innenliegend angeordneten Befestigungseinheit.

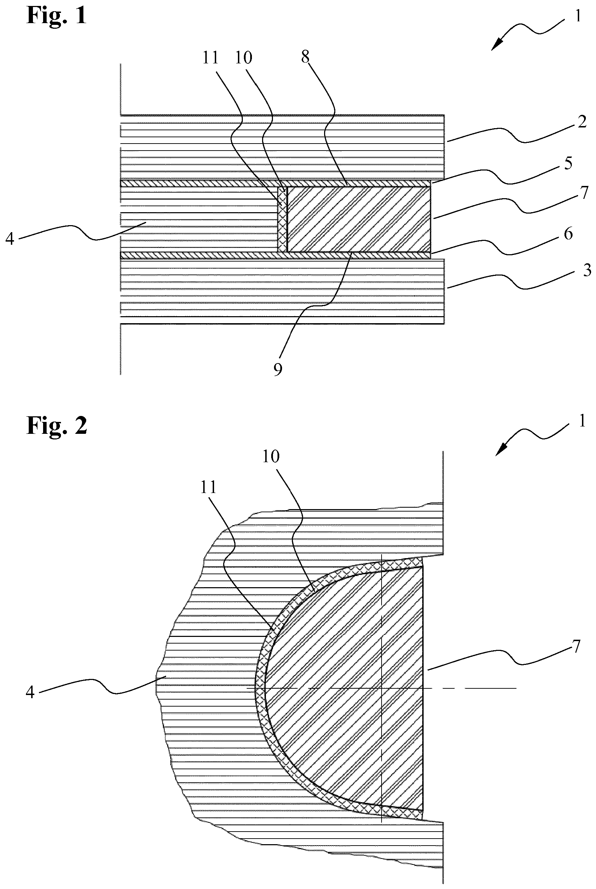

Fig. 1 zeigt beispielhaft einen seitlichen Schnitt einer ersten Ausgestaltung einer erfindungsgemäßen Glasverbundeinheit 1. In Fig. 2 ist ein zweiter, horizontaler Schnitt durch die mittlere Glasplatte der Glasverbundeinheit 1 aus Fig. 1 gezeigt. Die Glasverbundeinheit 1 umfasst dabei eine erste Glasscheibe 2, eine zweite Glasscheibe 3 und eine zwischen der ersten Glasscheibe 2 und der zweiten Glasscheibe 3 angeordnete dritte Glasscheibe 4. Die erste Glasscheibe 2 ist über eine erste Verbindungsschicht 5 mit der dritten Glasscheibe 4 und die zweite Glasscheibe 3 ist über eine zweite Verbindungsschicht 6 mit der dritten Glasscheibe 4 verbunden, insbesondere verklebt. Die dritte Glasscheibe 4 weist dabei eine randseitige Ausnehmung auf, in die ein Befestigungselement 7, insbesondere ein Befestigungselement 7 aus Titan, eingebracht ist. Die Dicke des Befestigungselements 7 entspricht dabei der Dicke der dritten Glasscheibe 4. Wie aus Fig. 2 hervorgeht, ist das Befestigungselement 7 in etwa halbkreisscheibenförmig ausgestaltet, wobei die dritte Glasscheibe 4 eine dazu entsprechend ausgebildete Ausnehmung aufweist.

Allerdings sind auch andere Ausgestaltungen des Befestigungselements 7, beispielsweise ein Befestigungselement 7 mit einem rechteckigen Querschnitt, und eine dazu entsprechende Ausgestaltung der Ausnehmung der dritten Glasscheibe 4 möglich. Das Befestigungselement 7 umfasst dabei insbesondere in Fig. 1 und Fig. 2 nicht gezeigte Mittel, wie beispielsweise eine mit einem Gewinde versehene Bohrung, zum Befestigen der Glasverbundeinheit 1 an einer Stützkonstruktion oder zum Verbinden mit weiteren Glasverbundeinheiten 1. Das Befestigungselement 7 ist über eine der ersten Glasscheibe 2 zugewandte erste Fläche 8 durch die erste Verbindungsschicht 5 mit der ersten Glasscheibe 2 und über eine der zweiten Glasscheibe 3 zugewandte zweite Fläche 9 durch die zweite Verbindungsschicht 6 mit der zweiten Glasscheibe 3 verbunden, insbesondere verklebt. Zwischen einer in Richtung der dritten Glasscheibe 4 weisenden Stirnfläche 10 des Befestigungselements 7 und der dritten Glasscheibe 4 ist eine Trennschicht 11 angebracht. Die Trennschicht 11 besteht dabei bevorzugt aus einem transparenten getemperten Silikon oder einem weichen Polyvinylbutyral mit einer Shore-A-Härte von unter 10. Dabei besteht vorzugsweise keine nennenswerte Adhäsion zwischen der Trennschicht 11 und dem Befestigungselement 7 sowie zwischen der Trennschicht 11 und einer Glasscheibe 2, 3, 4 sowie zwischen der Trennschicht 11 und den Verbindungsschichten 5, 6. Dadurch können Spannungen zwischen den einzelnen Elementen der Glasverbundeinheit 1, die insbesondere während der Fertigung der Glasverbundeinheit 1 entstehen können, sowie dadurch hervorgerufene Schäden der Glasverbundeinheit 1 verhindert werden. Das Befestigungselement 7 sowie die Trennschicht 11 schließen dabei nicht mit den Außenkanten der Glasscheiben 2, 3, 4 ab, sondern sind nach innen versetzt angeordnet. Dadurch werden Schäden der Glasverbundeinheit 1, die bei einem Nachbearbeitungsprozess der Glasverbundeinheit 1 bzw. einer dabei erfolgenden Wechselwirkung mit dem Befestigungselement 7 und/oder der Trennschicht 11 entstehen können, vermieden. In den dadurch entstehenden Versatz an der Außenkante der Glasverbundeinheit 1 kann beispielsweise ein Adapter zur Befestigung an einer Stützkonstruktion, ein Distanzstück oder ein Füllmaterial eingebracht werden. Die Verbindungsschichten 5, 6 können dabei, wie in Fig. 1 gezeigt ist, im Bereich des Befestigungselements 7 ebenfalls nach innen versetzt angeordnet sein. Es ist allerdings auch eine Ausgestaltung der Glasverbundeinheit 1 möglich, bei der das Befestigungselement 7 und die Verbindungsschichten 5, 6 mit den Außenkanten der Glasscheiben 2, 3, 4 abschließen.

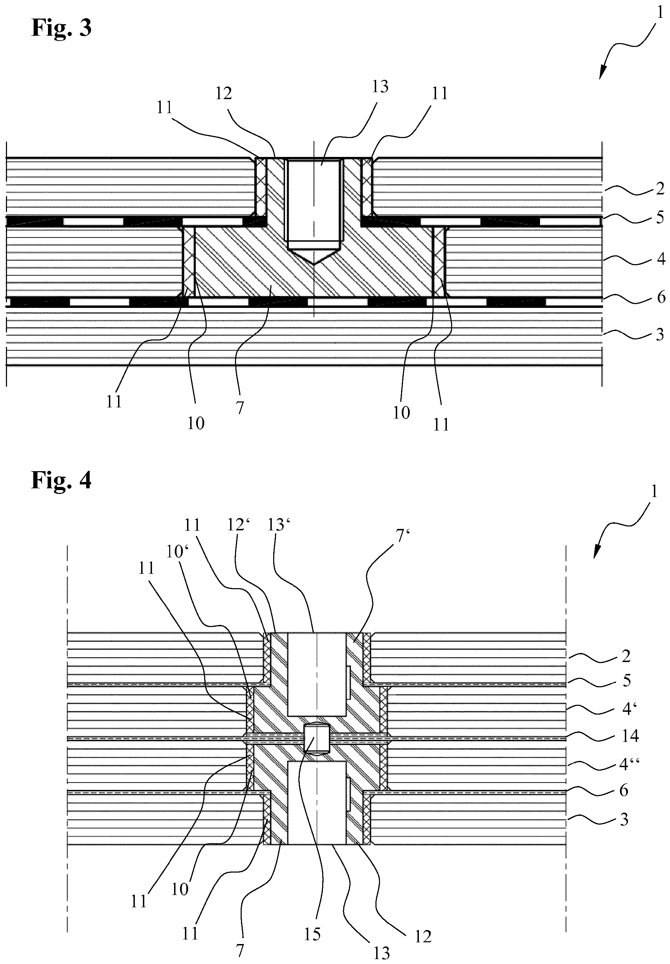

Fig. 3 zeigt beispielhaft einen Schnitt durch eine zweite Ausführungsform einer erfindungsgemäßen Glasverbundeinheit 1. Im Gegensatz zu der in Fig. 1 und Fig. 2 gezeigten Glasverbundeinheit 1 weist die Glasverbundeinheit 1 aus Fig. 3 ein Befestigungselement 7 auf, das in einer innenliegend angeordneten Ausnehmung der dritten Glasscheibe 4 eingebracht ist. Das Befestigungselement 7 weist dabei einen Steg 12 auf, der durch eine Öffnung der ersten Glasscheibe 2 geführt ist. Die Öffnung der ersten Glasscheibe 2 ist dabei, wie in Fig. 3 gezeigt ist, insbesondere kleiner ausgestaltet als die Ausnehmung der dritten Glasscheibe 4. Das Befestigungselement 7 ist über die zweite Verbindungsschicht 6 mit der zweiten Glasscheibe 3 und zumindest bereichsweise über die erste Verbindungsschicht 5 mit der ersten Glasscheibe 2 verbunden. Analog zu dem in Fig. 1 und Fig. 2 gezeigten Ausführungsbeispiel ist zwischen den Stirnflächen 10 des Befestigungselements 7 und der dritten Glasscheibe 4 die Trennschicht 11 angeordnet. In dem Zwischenraum des durch die Öffnung der ersten Glasscheibe 2 ragenden Stegs 12 und der ersten Glasscheibe 2 ist hierbei ebenfalls die Trennschicht 11 eingebracht. Das in Fig. 3 gezeigte Befestigungselement 7 weist eine durch den Steg 12 verlaufende Bohrung 13 auf. Über einen in die Bohrung 13 einbringbaren Bolzen kann die Glasverbundeinheit 1 an einer Stützkonstruktion angebracht oder mit einer weiteren Glasverbundeinheit 1 verbunden werden. Die Bohrung 13 kann dabei insbesondere mit einem Gewinde versehen sein, wobei ein darin einbringbarer Bolzen, insbesondere eine Schraube, ein dazu entsprechendes Gegengewinde aufweist.

Fig. 4 zeigt beispielhaft einen Schnitt durch eine dritte Ausführungsform einer erfindungsgemäßen Glasverbundeinheit 1. Die zwischen der ersten Glasscheibe 2 und der zweiten Glasscheibe 3 angeordnete dritte Glasscheibe 4 besteht hierbei aus zwei Glasplatten 4', 4" die über eine weitere Verbindungsschicht 14, die insbesondere aus dem Material der ersten Verbindungsschicht 5 oder der zweiten Verbindungsschicht 6 bestehen kann, miteinander verbunden sind. In die Glasverbundeinheit 1 ist innenliegend eine Befestigungseinheit bestehend aus einem ersten Befestigungselement 7 sowie einem zweiten Befestigungselement 7` eingebracht. Die Befestigungselemente 7, 7` weisen dabei jeweils einen Steg 12, 12' auf, wobei der Steg 12 des ersten Befestigungselements 7 durch eine Öffnung der ersten Glasscheibe 2 und der Steg 12' des zweiten Befestigungselements 7'durch eine Öffnung der zweiten Glasscheibe 3 nach außen geführt ist. Die beiden Befestigungselemente 7, 7` sind über die zwischen den beiden Glasplatten 4', 4" der dritten Glasscheibe 4 angeordnete Verbindungsschicht 14 sowie über ein zusätzliches Verbindungselement 15 im Inneren der Glasverbundeinheit 1 miteinander verbunden. Ansonsten entspricht die Einbindung der beiden Befestigungselemente 7, 7` der Einbindung des innenliegenden Befestigungselements 7 aus Fig. 3. Die Befestigungselemente 7, 7` weisen weiter Bohrungen 13, 13` auf, die eine beidseitige Verbindung der Glasverbundeinheit 1 mit einer Stützstruktur und/oder mit weiteren Glasverbundeinheiten 1 ermöglichen.

Die erfindungsgemäße Glasverbundeinheit ist nicht auf die dargestellten Ausführungsformen beschränkt. Insbesondere kann eine Glasverbundeinheit dabei auch aus zusätzlichen Glasscheiben bestehen sowie mehrere Befestigungselemente, insbesondere auch unterschiedlich eingebundene Befestigungselemente, d.h. sowohl randseitig als auch innenliegend eingebundene Befestigungselement, aufweisen. Auch die Ausgestaltung der Befestigungselemente ist nicht auf die beispielhaft dargestellten Befestigungselemente beschränkt. Insbesondere kann die Form der Befestigungselemente, die Ausgestaltung der Stege der Befestigungselemente sowie Mittel zur Befestigung der Glasverbundeinheit an einer Stützkonstruktion oder zur Verbindung mit weiteren Glasverbundeinheiten von den beispielhaft dargestellten Ausführungsformen abweichen.

## Patentansprüche

1. Glasverbundeinheit (1) umfassend mindestens eine erste Glasscheibe (2) und eine zweite Glasscheibe (3) sowie eine zwischen der ersten Glasscheibe (2) und der zweiten Glasscheibe (3) angeordnete dritte Glasscheibe (4), wobei die dritte Glasscheibe (4) mindestens eine Ausnehmung zur Aufnahme eines Befestigungselements (7) aufweist, eine zwischen der ersten Glasscheibe (2) und der dritten Glasscheibe (4) angeordnete erste Verbindungsschicht (5) zur Verbindung der ersten Glasscheibe (2) mit der dritten Glasscheibe (4) und eine zwischen der zweiten Glasscheibe (3) und der dritten Glasscheibe (4) angeordnete zweite Verbindungsschicht (6) zur Verbindung der zweiten Glasscheibe (3) mit der dritten Glasscheibe (4) sowie ein Befestigungselement (7), das in die mindestens eine Ausnehmung der dritten Glasscheibe (4) eingebracht ist, wobei eine der ersten Glasscheibe (2) zugewandte erste Fläche (8) des Befestigungselements (7) über die erste Verbindungsschicht (5) mit der ersten Glasscheibe (2) und/oder eine der zweiten Glasscheibe (3) zugewandte zweite Fläche (9) des Befestigungselements (7) über die zweite Verbindungsschicht (6) mit der zweiten Glasscheibe (3) verbunden ist, **dadurch gekennzeichnet, dass** zwischen der oder jeder in Richtung der dritten Glasscheibe (4) weisenden Stirnfläche (10) des Befestigungselements (7) und der dritten Glasscheibe (4) eine sich von den Verbindungsschichten (5, 6) unterscheidende, das Befestigungselement (7) und die dritte Glasscheibe (4) nicht rigide verbindende Trennschicht (11) eingebracht ist, wobei die Shore-A-Härte der Trennschicht (11) deutlich unter der Shore-A-Härte der Verbindungsschicht (5, 6) liegt und/oder wobei die Adhäsion zwischen der Trennschicht (11) und dem Befestigungselement (7) und/oder die Adhäsion zwischen der Trennschicht (11) und den Glasscheiben (2, 3, 4) deutlich geringer als die Adhäsion der Verbindungsschichten (5, 6) und dem Befestigungselement (7) bzw. die Adhäsion der Verbindungsschichten (5, 6) und den Glasscheiben (2, 3, 4) ist.

2. Glasverbundeinheit (1) nach Anspruch 1, **dadurch gekennzeichnet, dass** die Trennschicht (11) eine Shore-A-Härte von unter 90, insbesondere von unter 60, aufweist.

3. Glasverbundeinheit (1) nach Anspruch 2, **dadurch gekennzeichnet, dass** die Trennschicht (11) eine Shore-A-Härte von unter 40, insbesondere von unter 10 aufweist.

4. Glasverbundeinheit (1) nach einem der voranstehenden Ansprüche, **dadurch gekennzeichnet, dass** die Adhäsion zwischen der Trennschicht (11) und dem Befestigungselement (7) und/oder die Adhäsion zwischen der Trennschicht (11) und den Glasscheiben (2, 3, 4) und/oder die Adhäsion zwischen der Trennschicht und den Verbindungsschichten (5, 6) geringer als 1 N/mm² ist.

5. Glasverbundeinheit (1) nach einem der voranstehenden Ansprüche, **dadurch gekennzeichnet, dass** die Trennschicht (11) transparent ist.

6. Glasverbundeinheit (1) nach einem der voranstehenden Ansprüche, **dadurch gekennzeichnet, dass** die Trennschicht (11) aus einem Elastomer besteht.

7. Glasverbundeinheit (1) nach Anspruch 6, **dadurch gekennzeichnet, dass** die Trennschicht (11) aus einem Silikon, insbesondere aus einem getemperten Silikon, speziell einem kondensationsvernetzten oder platinvernetzten Silikon, oder einem Polyvinylbutyral besteht.

8. Glasverbundeinheit (1) nach einem der voranstehenden Ansprüche **dadurch gekennzeichnet, dass** die erste Glasscheibe (2) über die erste Verbindungsschicht (5) vollflächig mit der dritten Glasscheibe (4) und/oder die zweite Glasscheibe (3) über die zweite Verbindungsschicht (6) vollflächig mit der dritten Glasscheibe (4) verbunden ist.

9. Glasverbundeinheit (1) nach einem der voranstehenden Ansprüche **dadurch gekennzeichnet, dass** das Befestigungselement (7) aus einem Metall, insbesondere aus Titan, oder aus einer Metalllegierung besteht.

10. Glasverbundeinheit (1) nach einem der voranstehenden Ansprüche, **dadurch gekennzeichnet, dass** das in die Ausnehmung eingebrachte Befestigungselement (7) zumindest teilweise von außen zugänglich ist.

11. Glasverbundeinheit (1) nach einem der voranstehenden Ansprüche **dadurch gekennzeichnet, dass** das Befestigungselement (7) von außen zugänglich ist oder nach außen weisende Mittel zum Befestigen der Glasverbundeinheit (1) an einer Stützkonstruktion aufweist.

12. Glasverbundeinheit (1) nach einem der voranstehenden Ansprüche, **dadurch gekennzeichnet, dass** die Ausnehmung randseitig an der dritten Glasscheibe (4) angeordnet ist.

13. Glasverbundeinheit (1) nach einem der voranstehenden Ansprüche, **dadurch gekennzeichnet, dass** die Ausnehmung innenliegend in der dritten Glasscheibe (4) angeordnet ist und die erste Glasscheibe (2) und/oder die zweite Glasscheibe (3) eine Öffnung im Bereich der Ausnehmung aufweist.

14. Glasverbundeinheit (1) nach Anspruch 13, **dadurch gekennzeichnet, dass** das in die Ausnehmung eingebrachte Befestigungselement (7) zumindest einen Steg (12, 12') umfasst, der durch die zumindest eine Öffnung der ersten Glasscheibe (2) und/oder der zweiten Glasscheibe (3) geführt ist, wobei bevorzugt zwischen dem zumindest einen Steg (12, 12') und der zumindest einen Öffnung der ersten Glasscheibe (2) und/oder der zweiten Glasscheibe (3) die Trennschicht (11) angeordnet ist.

15. Verwendung der nach einem der Ansprüche 1 bis 14 gebildeten Glasverbundeinheit (1) als funktionelles Element eines Gebäudes, insbesondere als Fassadenelement, oder als funktionelles Element einer Gebäudeeinrichtung, insbesondere einer Treppe.

## Claims

1. Composite glass unit (1) comprising at least a first glass sheet (2) and a second glass sheet (3) as well as a third glass sheet (4) arranged between the first glass sheet (2) and the second glass sheet (3), the third glass sheet (4) having at least one cutout for receiving a connecting element (7), a first bonding layer (5) arranged between the first glass sheet (2) and the third glass sheet (4) for connecting the first glass sheet (2) to the third glass sheet (4), and a second bonding layer (6) arranged between the second glass sheet (3) and the third glass sheet (4) for connecting the second glass sheet (3) to the third glass sheet (4), as well as a connecting element (7), which is introduced into the at least one cutout in the third glass sheet (4), wherein a first surface (8) of the connecting element (7) facing the first glass sheet (2) is connected to the first glass sheet (2) via the first bonding layer (5) and/or a second surface (9) of the connecting element (7) facing the second glass sheet (3) is connected to the second glass sheet (3) via the second bonding layer (6), **characterized in that** between the or each end surface (10) of the connecting element (7) facing in the direction of the third glass sheet (4) and the third glass sheet (4) a separating layer (11) is inserted, which is different from the bonding layers (5, 6) and does not rigidly connecting the connecting element (7) and the third glass sheet (4), the Shore-A-hardness of the separating layer (11) being significantly below the Shore-A-hardness of the bonding layer (5, 6) and/or the adhesion between the separating layer (11) and the connecting element (7) and/or the adhesion between the separating layer (11) and the glass sheets (2, 3, 4) being significantly lower than the adhesion of the connecting layers (5, 6) and the connecting element (7) or the adhesion of the bonding layers (5, 6) and the glass sheets (2, 3, 4).

2. Composite glass unit (1) according to claim 1, **characterized in that** the separating layer (11) has a Shore-A-hardness of below 90, in particular below 60.

3. Composite glass unit (1) according to claim 2, **characterized in that** the separating layer (11) has a Shore-A-hardness of below 40, in particular below 10.

4. Composite glass unit (1) according to one of the preceding claims, **characterized in that** the adhesion between the separating layer (11) and the connecting element (7) and/or the adhesion between the separating layer (11) and the glass sheets (2, 3, 4) and/or the adhesion between the separating layer and the connecting layers (5, 6) is less than 1 N/mm².

5. Composite glass unit (1) according to one of the preceding claims, **characterized in that** the separating layer (11) is transparent.

6. Composite glass unit (1) according to one of the preceding claims, **characterized in that** the separating layer (11) consists of an elastomer.

7. Composite glass unit (1) according to claim 6, **characterized in that** the separating layer (11) consists of a silicone, in particular an annealed silicone, especially a condensation-crosslinked or platinum-crosslinked silicone, or a polyvinyl butyral.

8. Composite glass unit (1) according to one of the preceding claims, **characterized in that** the first glass sheet (2) is connected over its entire surface to the third glass sheet (4) via the first bonding layer (5) and/or the second glass sheet (3) is connected over its entire surface to the third glass sheet (4) via the second bonding layer (6).

9. Composite glass unit (1) according to one of the preceding claims, **characterized in that** the connecting element (7) is made of a metal, in particular titanium, or of a metal alloy.

10. Composite glass unit (1) according to one of the preceding claims, **characterized in that** the connecting element (7) introduced into the cutout is at least partially accessible from the outside.

11. Composite glass unit (1) according to one of the preceding claims, **characterized in that** the connecting element (7) is accessible from the outside or has outwardly facing means for fastening the composite glass unit (1) to a support structure.

12. Composite glass unit (1) according to one of the preceding claims, **characterized in that** the cutout is arranged at the edge of the third glass sheet (4).

13. Composite glass unit (1) according to one of the preceding claims, **characterized in that** the cutout is arranged internally in the third glass sheet (4) and the first glass sheet (2) and/or the second glass sheet (3) has an opening in the region of the cutout.

14. Composite glass unit (1) according to claim 13, **characterized in that** the connecting element (7) introduced into the cutout comprises at least one bar (12, 12'), which is guided through the at least one opening of the first glass sheet (2) and/or of the second glass sheet (3), the separating layer (11) preferably being arranged between the at least one bar (12, 12') and the at least one opening of the first glass sheet (2) and/or of the second glass sheet (3).

15. Use of the composite glass unit (1) formed according to any one of claims 1 to 14 as a functional element of a building, in particular as a facade element, or as a functional element of a building facility, in particular a staircase.

## Revendications

1. Unité de verre composite (1) comprenant au moins une première vitre en verre (2) et une deuxième vitre en verre (3) ainsi qu'une troisième vitre en verre (4) disposée entre la première vitre en verre (2) et la deuxième vitre en verre (3), la troisième vitre en verre (4) présentant au moins une cavité pour la réception d'un élément de fixation (7), une première couche de liaison (5) disposée entre la première vitre en verre (2) et la troisième vitre en verre (4) pour la liaison de la première vitre en verre (2) avec la troisième vitre en verre (4) et une deuxième couche de liaison (6) disposée entre la deuxième vitre en verre (3) et la troisième vitre en verre (4) pour la liaison de la deuxième vitre en verre (3) avec la troisième vitre en verre (4) ainsi qu'un élément de fixation (7), qui est inséré dans la au moins une cavité de la troisième vitre en verre (4), une première surface (8) de l'élément de fixation (7), tournée vers la première vitre (2), étant reliée par l'intermédiaire de la première couche de liaison (5) avec la première vitre en verre (2) et/ou une deuxième surface (9) de l'élément de fixation (7), tournée vers la deuxième vitre en verre (3), étant reliée par le biais de la deuxième couche de liaison (6) avec la deuxième vitre en verre (3), **caractérisée en ce qu'**une couche de séparation (11) non rigide reliant l'élément de fixation (7) et la troisième vitre en verre (4), se distinguant des couches de liaison (5, 6), est insérée entre la ou chaque surface frontale (10) de l'élément de fixation (7) pointant dans la direction de la troisième vitre en verre (4) et la troisième vitre en verre (4), la dureté Shore A de la couche de séparation (11) se situant nettement en dessous de la dureté Shore A de la couche de liaison (5, 6) et/ou l'adhérence entre la couche de séparation (11) et l'élément de fixation (7) et/ou l'adhérence entre la couche de séparation (11) et les vitres en verre (2, 3, 4) étant nettement plus faible que l'adhérence des couches de liaison (5, 6) et de l'élément de fixation (7) et/ou l'adhérence des couches de liaison (5, 6) et des vitres en verre (2, 3, 4).

2. Unité de verre composite (1) selon la revendication 1, **caractérisée en ce que** la couche de séparation (11) présente une dureté Shore A inférieure à 90, en particulier inférieure à 60.

3. Unité de verre composite (1) selon la revendication 2, **caractérisée en ce que** la couche de séparation (11) présente une dureté Shore A inférieure à 40, en particulier inférieure à 10.

4. Unité de verre composite (1) selon l'une des revendications précédentes, **caractérisée en ce que** l'adhérence entre la couche de séparation (11) et l'élément de fixation (7) et/ou l'adhérence entre la couche de séparation (11) et les vitres en verre (2, 3, 4) et/ou l'adhérence entre la couche de séparation et les couches de liaison (5, 6) est inférieure à 1 N/mm².

5. Unité de verre composite (1) selon l'une des revendications précédentes, **caractérisée en ce que** la couche de séparation (11) est transparente.

6. Unité de verre composite (1) selon l'une des revendications précédentes, **caractérisée en ce que** la couche de séparation (11) se compose d'un élastomère.

7. Unité de verre composite (1) selon la revendication 6, **caractérisée en ce que** la couche de séparation (11) se compose d'une silicone, en particulier d'une silicone recuite, notamment d'une silicone réticulée par condensation ou réticulée au platine, ou d'un polyvinylbutyral.

8. Unité de verre composite (1) selon l'une des revendications précédentes, **caractérisée en ce que** la première vitre en verre (2) est reliée à pleine surface avec la troisième vitre en verre (4) par l'intermédiaire de la première couche de liaison (5) et/ou que la deuxième vitre en verre (3) est reliée à pleine surface avec la troisième vitre en verre (4) par l'intermédiaire de la deuxième couche de liaison (6).

9. Unité de verre composite (1) selon l'une des revendications précédentes, **caractérisée en ce que** l'élément de fixation (7) se compose d'un métal, en particulier de titane, ou d'un alliage de métal.

10. Unité de verre composite (1) selon l'une des revendications précédentes, **caractérisée en ce que** l'élément de fixation (7) inséré dans la cavité est accessible au moins partiellement depuis l'extérieur.

11. Unité de verre composite (1) selon l'une des revendications précédentes, **caractérisée en ce que** l'élément de fixation (7) est accessible depuis l'extérieur ou présente des moyens pointant vers l'extérieur pour la fixation de l'unité de verre composite (1) sur une construction support.

12. Unité de verre composite (1) selon l'une des revendications précédentes, **caractérisée en ce que** la cavité est disposée du côté bord de la troisième vitre en verre (4).

13. Unité de verre composite (1) selon l'une des revendications précédentes, **caractérisée en ce que** la cavité est disposée en résidant à l'intérieur dans la troisième vitre en verre (4) et **en ce que** la première vitre en verre (2) et/ou la deuxième vitre en verre (3) présente une ouverture dans la zone de la cavité.

14. Unité de verre composite (1) selon la revendication 13, **caractérisée en ce que** l'élément de fixation (7) inséré dans la cavité comprend au moins une âme (12, 12') qui est guidée par la au moins une ouverture de la première vitre en verre (2) et/ou de la deuxième vitre en verre (3), la couche de séparation (11) étant disposée de préférence entre la au moins une âme (12, 12') et la au moins une ouverture de la première vitre en verre (2) et/ou de la deuxième vitre en verre (3).

15. Utilisation de l'unité de verre composite (1) formée selon l'une des revendications 1 à 14 en tant qu'élément fonctionnel d'un bâtiment, en particulier en tant qu'élément de façade, ou en tant qu'élément fonctionnel d'un agencement de bâtiment, notamment d'un escalier.
